Europäisches Patentamt

European Patent Office

Office européen des brevets

(11) Publication number: **0 229 863 B1**

# EUROPEAN PATENT SPECIFICATION

(45) Date of publication of patent specification: **30.10.91**  (51) Int. Cl.⁵: **G09F  13/18, F21S 5/00**

(21) Application number: **86100956.1**

(22) Date of filing: **24.01.86**

(54) **An illuminated board.**

(43) Date of publication of application:
**29.07.87 Bulletin  87/31**

(45) Publication of the grant of the patent:
**30.10.91 Bulletin  91/44**

(84) Designated Contracting States:
**AT BE CH DE FR GB IT LI NL SE**

(56) References cited:
**EP-A- 0 167 289**
**GB-A- 1 162 560**
**US-A- 3 464 133**
**US-A- 4 059 916**

(73) Proprietor: **Johnsen Vinther, Franz**
**Lykkesholms Allé 5**
**DK-1902 Copenhagen V(DK)**

(72) Inventor: **Johnsen Vinther, Franz**
**Lykkesholms Allé 5**
**DK-1902 Copenhagen V(DK)**

(74) Representative: **Koepsell, Helmut, Dipl.-Ing.**
**Mittelstrasse 7**
**W-5000 Köln 1(DE)**

# Description

This invention relates to an illuminated board for use in connection with advertisement boards and illuminated tables such as drawing boards used in the graphic industries and by draftsmen.

Advertising boards with internal illumination have long been known. Usually such boards have been constructed with a transparent opalescent front panel, which may be painted or in other way provided with the desired image and a light source arranged behind the front panel. Generally, a uniform and bright illumination all over the front panel is desired in order that the entire surface area can be utilized for the image and in order that an attractive image may be seen. However, to provide such an illuminated board with a uniform illuminance and with an acceptable power economy has hitherto necessitated rather bulky constructions to allow a comparatively long distance from the light source to the surface of the board. As a great depth of design boards is for many applications not acceptable the practical solution has been to use a transparent front panel with strong light scattering capability or opacity, which invariably, however, means a reduced light transmittance, e.g. of the order 25 to 50 percent.

With the object to reduce the depth of such illuminated boards it is known to arrange the light source at the side of the surface and to utilize an oblique mirror in a size covering essentially the entire surface area and placed behind the front surface. If such a mirror is planar the light produced will not be uniform all over the front surface, but rather exhibit different intensities at different points all over the area of the front face, the intensity being proportional to the inverse square of the distance traversed by a light ray from the light source to the respective points. To overcome this, curved mirrors have been used, but these constructions are costly to manufacture and still necessitate a considerable depth of the advertisement board.

European patent no. 0 167 289 describes a transparency apparatus designed to illuminate negative films, colour slides or the like, utilizing a wedge shaped transparent slab to direct the light onto the film. According to this reference the transparancy apparatus comprises a generally rectangular, tubular light guide plate having a flat upper surface, the underside of the plate having at least one tapered surface, which extends from a portion of the light guide plate near one longitudinal end surface of' the plate towards the other end so as to progressively approach the flat upper surface of the plate, a light source means being arranged to illuminate the plate through one end surface of the light guide plate. The tapered surface is provided with fine convexities and concavities in order to reflect light irregularly and randomly towards the upper surface.

The object of the device according to this reference is to provide an illumination of the upper surface, which should preferably be uniform over the portion of the upper surface area used to display the slide.

It is commonly presumed that this object will be achieved by an arrangement as the one described in the reference, the rationale being that light entering the end face of a wedge-shaped, transparent plate with some index of refraction larger than that of the surrounding space will pass through the wedge being reflected internally at the upper face and at the lower face several times to eventually emanate from the upper face or from the lower face. At the first of these reflections the angle of incidence, i.e. the angle between the incoming ray striking the surface and the normal to this surface, will for light rays entering within a range of different directions be so large that the internal reflection is total.

According to common optical science the bordering angle g of total reflection inside a body with index of refraction n and surrounded by air will be $g = \arcsin 1/n$. Thus e.g. $n = 1.5$ defines $g = 41.8°$ meaning that all light rays striking an inner surface in such a body with an angle of incidence larger than $41.8°$ will be reflected totally. As incidentally, the faces of the transparent wedge-shaped plate are not parallel, but rather arranged at a small angle, i.e. the wedge angle, the angle of light incidence is reduced upon each subsequent reflection with an amount equal to the wedge angle, whereby any ray of light after some number of reflections dependent upon the initial path and direction of that particular light ray will no longer be reflected internally, but will exit through a side face. Light emanating from the lower face is recovered by separate reflector means and redirected back into the wedge passing through the wedge with but a small angle of refraction to exit through the opposite side. Optical considerations based on the above outlined theory predict that, provided the light enters the wedge end face in a regularly distributed fashion, the light will also emanate from the side faces, respectively from the front face, in a corresponding regularly distributed fashion. It is to be particularly noted that the light intensity at the side faces of the wedge according to this theory is expected to be independent of the distance from the broad end face of the wedge.

Applicant has found that practical arrangements intended to utilize this principle do not perform as expected and in fact perform far from satisfactory, in particular for larger areas. The efficiency in terms of the illuminance produced appears to be low, but above all the illuminance is non-uniform showing a pronounced distance-dependent variation similar to what is obtained by a similar reflector without the wedge. Thus, it is evident that the wedge does not effect the light distribution in tie manner predicted by the outlined theory. Such arrangements have hitherto been used to illuminate comparatively small objects such as photographic films, where the wedge did not have to be very small and where neither power economy nor perfect uniformity has been critical. Advertisement boards based on this theory in larger sizes have hitherto never been used because a satisfactory illumination could not be achieved. Another undesirable problem that was observed has been the appearance of so-called ghost images as the image placed in front of the wedge produced mirror, images in the reflector behind the wedge that could be seen from the front side offset from the prime image. It has been suggested that these mirror images could be blurred so much that they were no longer obtrusive by roughening one of the wedge faces or by coating a wedge face with some form of diffusive material. Such treatment, however, causes a further reduction in the produced illumination.

More recently one factor causing low efficiency has been identified, in that the major part of the light from such a device emanates from the wedge at rather oblique angles and therefore is of no use for observers viewing the, front face from a point perpendicular to that front face. This factor, however, in no way explains the non-uniformity of the illuminance pattern seen. It is known in the art to redirect the light exiting the wedge at oblique angles by some diffusive treatment of the wedge surface, but such treatment cannot remedy the two major problems, the low efficiency and the non-uniformity of the illuminance.

The inventor has discovered that the reason for the unexpected non-uniformity is that the regular pattern of reflections is destroyed if the smooth wedge surface is impaired in any way, be it by roughening, coating or contact with any other medium, whether transparent or not. At the point of any such surface impairment the regular reflection of light rays is destroyed and instead a diffuse scattering of light is produced. The result is a light distribution similar to what can be obtained with a mirror and without the wedge.

The object of the invention is to provide an illuminated board for use as an advertisement board, a traffic sign board, an illuminated table, such as a drawing board or a shop sign, at a lower energy consumption and of a less bulky construction than in the case of devices according to the prior art.

This object is achieved according to the invention by an illuminated board comprising one or more light sources, a front panel, a substantially rectangular, transparent, wedge-formed slab essentially defined by two substantially triangular basis faces, a front face, a rear face and a broad end face, said one or more light sources being arranged to illuminate the broad end face of the wedge, an opalescent front panel covering the front face and a light-reflecting rear panel covering the rear face of the wedge, said board being characterized by said panels being arranged parallel to the respective faces at a distance.

"Opalescent" is to be understood as "milky". The manufacturers of boards normally make use of front panels having varying degrees of opalescence. A high degree of opalescence means a low degree of translucence.

The construction of the invention brings about an illuminated board, in which substantially all of the light source's light without any loss is directed towards the front plate, which can be chosen with a low degree of opalescence, i.e. a high degree of translucence so that the loss of light will be low.

Typically, according to the invention it will be possible to use front panels having a light transmittance of 75% compared to existing sign board systems which make use of front panels having a light transmittance of 25-50%.

In the present invention, not only will there be no need for concealing the light source by choosing a high degree of opalescence and a corresponding high loss of light energy, but the thickness of the illuminated board can be kept as low as that of the broad end face of the wedge or of the light source.

Experiments have led to the conclusion that the following features give an especially satisfactory board:

- The reflecting rear panel produces a diffusion of the light and is preferably of white colour.
- The front panel and the rear panel are mounted parallel to their respective faces at a distance of approx. 5 mm.
- The light sources are situated on a line which is parallel to the longitudinal axis of the broad end face of the wedge. Preferably luminous tubes are used as light sources because they optimally illuminate all of the broad end face of the wedge.
- The light sources are screened to the exterior so as to illuminate exclusively the broad end face of the wedge. The light source or sources may advantageously be mounted at the top of the rear panel which may continue into a U-shaped profile which serves the purpose of screening the light source of sources. The electrical supply is preferably the public current supply.

- The wedge-formed slab has a wedge angle of 1-4°, preferably about 2.5°.

The invention will be more fully explained in the following, reference being had to the drawing in which

Fig. 1 is a plan view of an embodiment of an illuminated board according to the invention, the size being 1. 5 meters x 0.5 meter,

Fig. 2 is a side-view of the illuminated board according to the invention,

Fig. 3 is a plan view showing an embodiment of the current supply (luminous tube embodiment),

Fig. 4 is an optical path diagram for the wedge, the front panel and the reflecting rear panel, and

Fig. 5 is a perspective view of the rectangular wedge with front panel and reflecting rear panel.

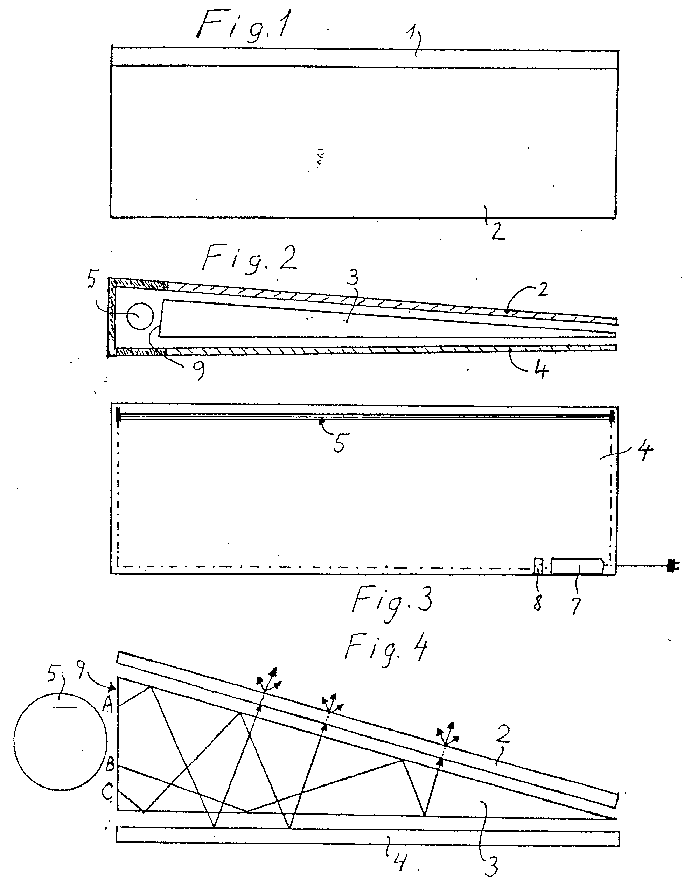

Fig. 2 shows an illuminated board according to the invention. The illuminated board consisting of a rectangular transparent wedge-formed slab 3, an opalescent front panel 2, a reflecting rear panel 4 having preferably white colour and a light source 5 in the form of a luminous tube which is screened by a U-formed profile 1.

The wedge 3 may be made of acryl and in one embodiment the dimensions are 150 x 50 cm² and the thickness or width of the end face 9 adjacent the light source is about 26 mm.

The narrow end face of the wedge, substantially an edge, has a width of 2 mm. The luminous tube 5 is placed on a line parallel to the longitudinal direction of the broad end face 9 of the wedge and fig. 3, in which the wedge and the front panel have been omitted, shows the electrical connection in which 7 is a coil and 8 is a starter. The latter two components may be situated behind the reflector but may also be placed completely outside the illuminated board.

The following is a description of the optical features of the illuminated board according to the invention.

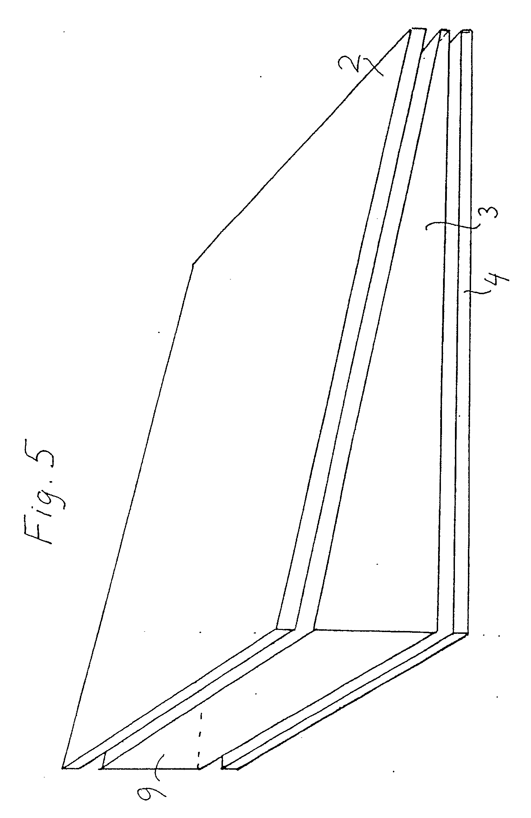

Fig. 4 shows the wedge 3, viewed from the side, having a front panel 2, a reflecting rear panel 4 and a light source 5.

When a beam of light arrives from the light source to the broad end face 9 of the wedge it will, due to the angle of the wedge, be reflected at increasing angles of incidence and deflection until the angle of incidence is so great that the light will leave the wedge at either the front face or the rear face. By examination of the beam A it will be seen that this beam is reflected at the top face, is directed through the bottom face, is reflected by the reflecting rear face and passes upwards through the wedge striking the front panel which is therefore illuminated. Beams B and C are examples of beams which arrive at the bottom face, are reflected upwards to the top face and are reflected again and finally leave the front face and arrive at the front panel which is illuminated.

## Claims

1. An illuminated board comprising one or more light sources (5), a front panel (2), a substantially rectangular, transparent wedge-formed slab (3) essentially defined by two substantially triangular basis faces, a front face, a rear face and a broad end face (9), said one or more light sources (5) being arranged to illuminate the broad end face (9) of the wedge. an opalescent front panel (2) covering the front face and a light-reflecting rear panel (4) covering the rear face of the wedge, CHARACTERIZED by said panels (2, 4) being arranged parallel to the respective faces at a distance.

2. Illuminated board according to claim 1, CHARACTERIZED by said distance being approximately 5 mm.

3. Illuminated board according to claim 1 or 2, CHARACTERIZED by said reflecting tear panel (4) being adapted to produce light diffusion.

4. Illuminated board according to claims 1, 2 or 3, CHARACTERIZED by the reflecting rear panel (4) being white.

5. Illuminated board according to claims 1-4, CHARACTERIZED by the light sources being situated on a line which is parallel to the broad end face (9) of the wedge.

6. Illuminated board according to claims 1-5, CHARACTERIZED by the light sources being screened to the exterior so as to illuminate exclusively the broad end face (9) of the wedge.

7. Illuminated board according to claims 1-6, CHARACTERIZED by the transparent wedge-formed slab (3) having a wedge angle of 1-4, preferably about 2.5°.

8. Illuminated board according to claims 1-7, CHARACTERIZED by said transparent, wedge-formed slab (3) being made of acryl.

## Revendications

1. Panneau éclairé comprenant une ou plusieurs sources de lumière (5), une plaque avant (2), un bloc en forme de coin ou prisme transparent sensiblement rectangulaire (3) essentiellement défini par deux faces de base sensiblement triangulaires, une face avant, une face arrière et une face d'extrémité large (9), les dites une ou plusieurs sources de lumière (5) étant disposées de manière à éclairer la face d'extrémité large (9) du prisme, une plaque avant opalescente (2) recouvrant la face avant et une plaque arrière de réflexion de la lumière (4) recouvrant la face arrière du prisme, caractérise en ce que les dites plaques (2,4) sont parallèles aux faces respectives et à une certaine distance de celles-ci.

2. Panneau éclairé suivant la revendication 1, caractérisé en ce que ladite distance est de 5 mm environ.

3. Panneau éclairé suivant la revendication 1 ou 2, caractérisé en ce que ladite plaque arrière réfléchissante (4) est prévue pour produire une diffusion de la lumière.

4. Panneau éclairé suivant les revendications 1,2 ou 3, caractérisé en' ce que la plaque arrière réfléchissante (4) est blanche.

5. Panneau éclairé suivant les revendications 1 à 4, caractérisé en ce que les sources de lumière sont situées sur une ligne qui est parallèle à la face d'extrémité large (9) du prisme.

6. Panneau éclairé suivant les revendications 1 à 5, caractérisé en ce que les sources de lumière sont isolées de l'extérieur par un écran de façon à éclairer exclusivement la face d'extrémité large (9) du prisme.

7. Panneau éclairé suivant les revendications 1 à 6, caractérisé en ce que le bloc en forme de coin transparent (3) présente un angle au sommet de 1 à 4°, et de préférence de 2,5° environ.

8. Panneau éclairé suivant les revendications 1 à 7, caractérisé en ce que ledit bloc transparent en forme de coin (3) est fabriqué en résine acrylique.

**Patentansprüche**

1. Lichtplatte mit einer oder mehreren Lichtguellen (5), einer vorderen Tafel (2), einer im wesentlichen rechteckigen, transparenten, keilförmigen Platte (3), die im wesentlichen von zwei im wesentlichen dreieckigen Grundflächen, einer Vorderfläche, einer Rückfläche und einer breiten Stirnfläche (9) begrenzt wird, wobei die eine oder mehreren Lichtguelle(n) (5) so angeordnet ist bzw. sind, daß sie die breite Stirnfläche (9) des Keiles beleuchtet bzw. beleuchten, sowie mit einer opalisierenden vorderen Tafel (2), die die Vorderfläche abdeckt, und einer lichtreflektierenden rückseitigen Tafel (4), die die rückseitige Fläche des Keiles abdeckt, dadurch gekennzeichnet, daß die Tafeln (2, 4) in einem Abstand parallel zur jeweiligen Fläche angeordnet sind.

2. Lichtplatte nach Anspruch 1, dadurch gekennzeichnet, daß der Abstand etwa 5 mm beträgt.

3. Lichtplatte nach Anspruch 1 oder 2, dadurch gekennzeichnet, daß die reflektierende, rückseitige Tafel (4) eine Lichtdiffusion bewirkt.

4. Lichtplatte nach Anspruch 1, 2 oder 3, dadurch gekennzeichnet, daß die reflektierende rückseitige Tafel (4) weiß ist.

5. Lichtplatte nach einem der Ansprüche 1 - 4, dadurch gekennzeichnet, daß die Lichtquellen auf einer Linie angeordnet sind, die parallel zur breiten Stirnfläche (9) des Keiles verläuft.

6. Lichtpltte nach Anspruch 1 - 5, dadurch gekennzeichnet, daß die Lichtquellen nach außen abgeschirmt sind, so daß sie ausschließlich die breite Stirnfläche (9) des Keiles beleuchten.

7. Lichtplatte nach Ansprüchen 1 - 6, dadurch gekennzeichnet, daß die transparente keilförmige Platte (3) einen Keilwinkel von 1 - 4°, vorzugsweise etwa 2,5° aufweist.

8. Lichtplatte nach den Ansprüchen 1 - 7, dadurch gekennzeichnet, daß die transparente, keilförmige Platte (3) aus Acryl hergestellt ist.

Fig.1

Fig.2

Fig.3

Fig.4

Fig. 5

EP 0 229 863 B1